# EUROPÄISCHE PATENTANMELDUNG

(11) **EP 2 916 089 A1**
(43) Veröffentlichungstag der Anmeldung: **09.09.2015**
(21) Anmeldenummer: 14000784.0
(22) Anmeldetag: 05.03.2014
(51) Int. Cl.: F25J 3/04, F25J 3/02, B63B 35/44, B63B 39/00

(54) **Schwimmfähige Tieftemperatur-Gaszerlegungsanlage und Verfahren zur Tieftemperatur-Gaszerlegung**

(71) Anmelder: Linde Aktiengesellschaft, 80331 München (DE)
(72) Erfinder: Hoffmann, Rainer, Dr., 82008 Unterhaching (DE)
(74) Vertreter: Imhof, Dietmar

(57) **Zusammenfassung**

Die Erfindung betrifft eine schwimmfähige Tieftemperatur-Gaszerlegungsanlage (10), die eine schwimmfähige Einheit (1) und wenigstens eine auf der schwimmfähigen Einheit (1) angeordnete Trennsäule (2) umfasst, wobei die wenigstens eine Trennsäule (2) zur Tieftemperatur-Gaszerlegung zumindest eines in die wenigstens eine Trennsäule (2) eingespeisten Gasgemischs eingerichtet ist und mit einer Längsachse (21) senkrecht zu einem Hauptdeck (11) der schwimmfähigen Einheit (1) angeordnet ist. Zumindest ein Abschnitt (22) der Trennsäule (2) entlang der Längsachse (21) ist unterhalb des Hauptdecks (11) angeordnet. Ein Verfahren zur Tieftemperatur-Gaszerlegung ist ebenfalls Gegenstand der Erfindung.

## Beschreibung

Die Erfindung betrifft eine schwimmfähige Tieftemperatur-Gaszerlegungsanlage und ein Verfahren zur Tieftemperatur-Gaszerlegung gemäß den Oberbegriffen der unabhängigen Patentansprüche.

Die Herstellung von Luftprodukten in flüssigem oder gasförmigem Zustand durch Tieftemperaturzerlegung von Luft in Luftzerlegungsanlagen ist bekannt. Derartige Luftzerlegungsanlagen weisen Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand (beispielsweise flüssigem Sauerstoff, LOX, gasförmigem Sauerstoff, GOX, flüssigem Stickstoff, LIN und/oder gasförmigem Stickstoff, GAN), also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein (siehe beispielsweise F.G. Kerry: Industrial Gas Handbook. Gas Separation and Purification. Boca Raton: CRC Press, 2006; Kapitel 3: Air Separation Technology).

Die vorliegende Erfindung ist nicht auf Luftzerlegungsanlagen beschränkt, sondern kann im Zusammenhang mit sämtlichen Anlagen und Verfahren zur Tieftemperatur-Gaszerlegung zum Einsatz kommen. Unter einer "Tieftemperatur-Gaszerlegung" wird dabei eine trenntechnische Behandlung verstanden, bei der aus einem abgekühlten Gasgemisch, insbesondere auf Grundlage von unterschiedlichen Siedepunkten bzw. Flüchtigkeiten der in dem Gasgemisch enthaltenen Komponenten, eine oder mehrere Fraktionen gebildet werden, die jeweils bezüglich einer oder mehrerer dieser Komponenten angereichert oder abgereichert sind. Die Tieftemperatur-Gaszerlegung kommt beispielsweise bei der trenntechnischen Behandlung von Synthesegas oder Spaltgas aus Dampfspaltverfahren bzw. Steamcrackern zum Einsatz. Fraktionen sind dabei beispielsweise "angereichert", wenn sie zumindest den 1,1-fachen, 1,5-fachen, 2-fachen, 5-fachen, 10-fachen, 100-fachen oder 1.000-fachen Gehalt, "abgereichert", wenn sie höchstens den 0,9-fachen, 0,5-fachen, 0,1-fachen, 0,01-fachen oder 0,001-fachen Gehalt einer oder mehrerer Komponenten, bezogen auf das Gasgemisch, enthalten. Eine entsprechende Fraktion kann auch überwiegend eine oder mehrere Komponenten enthalten, wobei der Begriff "überwiegend" beispielsweise einen Gehalt von wenigstens 90%, 95%, 98% oder 99% bezeichnen kann.

Eine "Tieftemperatur"-Gaszerlegung liegt insbesondere dann vor, wenn ein zu behandelndes Gasgemisch auf eine "tiefkalte" Temperatur, d.h. auf eine Temperatur deutlich unterhalb der jeweiligen Umgebungstemperatur, beispielsweise auf 200 Kelvin oder weniger, abgekühlt wird. Beispielsweise erfolgt die Abkühlung auf eine Temperatur unterhalb oder knapp oberhalb der Kondensationstemperatur einer oder mehrerer in einem entsprechenden Gasgemisch enthaltener Komponenten. Bei der Tieftemperatur-Gaszerlegung liegen die gewonnenen Fraktionen insbesondere zumindest zeitweise in flüssiger Form vor, beispielsweise in Form von flüssigem Sauerstoff, flüssigem Stickstoff oder flüssigen Kohlenwasserstofffraktionen.

Zur Tieftemperatur-Gaszerlegung können insbesondere die bereits erwähnten Destillationssäulen, aber auch andere Trenneinheiten wie Absorptionskolonnen zum Einsatz kommen. Zur Auslegung und Ausgestaltung entsprechender Vorrichtungen sei auf einschlägige Lehrbücher verwiesen (siehe beispielsweise K. Sattler: Thermische Trennverfahren. Grundlagen, Auslegung, Apparate. Weinheim: Wiley-VCH, 3. Auflage 2001). Derartige Trenneinheiten werden nachfolgend unter dem Begriff "Trennsäulen" zusammengefasst. Eine im Rahmen der vorliegenden Erfindung verwendete Trennsäule wird bei tiefkalten Temperaturen betrieben und ist zur Tieftemperatur-Gaszerlegung eingerichtet. Einer Trennsäule ist typischerweise immer zumindest eine flüssige Fraktion ("Sumpfprodukt") und eine gasförmige Fraktion ("Kopfprodukt") in einem oberen ("Kopf") bzw. unteren Bereich ("Sumpf") entnehmbar.

Die zur Tieftemperatur-Gaszerlegung eingesetzten Trennsäulen wie Destillationssäulen und Absorptionskolonnen sind typischerweise in sogenannten Coldboxen angeordnet. Hierbei handelt es sich um Isolierbehälter aus Metall, die die gesamte Trennsäule umgeben und mit isolierendem Material, beispielsweise Perlit, gefüllt sind. Vorteilhafterweise sind neben einer oder mehreren Trennsäulen auch die zum Betrieb der Trennsäulen erforderlichen Vorrichtungen wie Wärmetauscher und/oder Armaturen in der Coldbox angeordnet, so dass bei der Erstellung einer entsprechenden Anlage lediglich eine Verrohrung erfolgen muss.

Beispielsweise zur Inertisierung in Erdöl- und/oder Erdgastankern oder schwimmfähigen Einheiten zur Förderung, Verladung und Verarbeitung von Erdöl bzw. Erdgas (sogenannten Floating Production, Storage and Offloading Units, FPSO) werden Stickstoff oder stickstoffangereicherte Gasgemische verwendet. Für eine entsprechende Versorgung ist bereits aus der GB 1 463 075 A die Installation einer Luftzerlegungsanlage auf einem Schiff bekannt.

Aufgrund des Seegangs sind hier jedoch teilweise aufwendige Maßnahmen erforderlich, um eine zufriedenstellende Trennleistung der verwendeten Trennsäulen sicherzustellen. So wird die optimale Trennleistung einer Destillationssäule herkömmlicherweise bei einer gleichmäßigen Flüssigkeitsverteilung über den horizontalen Querschnitt erzielt. Schon geringe Ungleichverteilungen können beträchtliche Auswirkungen auf die Trennleistung haben (siehe beispielsweise T. Cullinane et al.: Effects of Tower Motion on Packing Efficiency. Brasil Offshore, 14. bis 17. Juni 2011, Dokument 143766-MS). Zur Verringerung entsprechender Effekte schlägt beispielsweise die EP 1 716 922 A1 die Verwendung einer spezifisch strukturierten Packung für eine auf einem Schiff eingesetzte Trennsäule vor.

Entsprechende Maßnahmen erweisen sich jedoch in der Praxis als aufwendig und/oder nicht ausreichend wirksam. Daher besteht auch weiterhin der Bedarf nach Verbesserungen bei der Tieftemperatur-Gaszerlegung auf See.

Vor diesem Hintergrund schlägt die vorliegende Erfindung eine schwimmfähige Tieftemperatur-Gaszerlegungsanlage und ein Verfahren zur Tieftemperatur-Gaszerlegung mit den Merkmalen der unabhängigen Patentansprüche vor. Bevorzugte Ausgestaltungen der Erfindung sind jeweils Gegenstand der abhängigen Patentansprüche und der nachfolgenden Beschreibung.

Die Erfindung geht dabei zunächst von einer an sich bekannten schwimmfähigen Tieftemperatur-Gaszerlegungsanlage aus, die wenigstens eine auf einer schwimmfähigen Einheit, insbesondere einem Schiff oder einer schwimmfähigen Plattform, angebrachte Trennsäule umfasst. Die wenigstens eine Trennsäule ist mit ihrer Längsachse beispielsweise im Wesentlichen senkrecht zu einem Hauptdeck eines Schiffs, also parallel zu dessen Gierachse, angeordnet. Entsprechendes gilt für andere schwimmfähige Einheiten wie beispielsweise auf Pontons schwimmende Plattformen. In Ruhelage der schwimmfähigen Einheit verläuft damit die Längsachse der wenigstens einen Trennsäule senkrecht zur Wasseroberfläche. Erfindungsgemäß ist dabei vorgesehen, dass zumindest ein Abschnitt der wenigstens einen Trennsäule entlang der Längsachse zumindest teilweise unterhalb eines Hauptdecks der schwimmfähigen Einheit angeordnet ist. Zumindest der Sumpf der wenigstens einen Trennsäule befindet sich dabei unterhalb des Hauptdecks der schwimmfähigen Einheit.

Insbesondere kann zumindest ein Abschnitt der wenigstens einen Trennsäule entlang der Längsachse unterhalb der Konstruktionswasserlinie oder einer anderen definierten Ebene unterhalb des Hauptdecks der schwimmfähigen Einheit angeordnet sein. Derartige Ebenen liegen in Ruhelage der schwimmfähigen Einheit parallel zur Wasseroberfläche und verlaufen beispielsweise durch das Metazentrum, den Schwerpunkt oder den Formschwerpunkt. Zu den genannten Begriffen sei auf bekannte Lehrbücher der Schiffskonstruktion verwiesen.

Vorliegend wird unter einem "Hauptdeck" (auch als "erstes Deck", engl. "main deck") eines Schiffs entsprechend der üblicherweise verwendeten Definition von Behörden und Klassifikationsgesellschaften das oberste, auf ganzer Länge durchlaufende Deck verstanden, sofern es gleichzeitig das Freiborddeck ist. Bei Volldeckschiffen ist dies der Fall. Hier ist das Hauptdeck gleichzeitig auch das Schottendeck, bis zu dem alle wasserdichten Schotten hinaufreichen. Ist über dem Freiborddeck ein weiteres, auf ganzer Länge durchlaufendes Deck angeordnet, wie früher bei sogenannten Schutzdeckern üblich, so gilt dieses als Hauptdeck. Schiffbaulich ist das Hauptdeck auch dasjenige, in dem sich die oberen auf ganzer Länge durchlaufenden Festigkeitsverbände des Schiffsrumpfs befinden. Auch andere schwimmfähige Einheiten wie die nachfolgend erläuterten schwimmfähigen Plattformen, weisen zumindest ein derartiges oberstes durchlaufendes Deck, also ein Hauptdeck, auf.

Wie bereits erwähnt, kann die wenigstens eine schwimmfähige Einheit im Rahmen der vorliegenden Erfindung insbesondere als Schiff oder als schwimmfähige Plattform ausgebildet sein. Die schwimmfähige Einheit kann insbesondere als sogenannter Halbtaucher ausgebildet sein, also als Schiff oder Plattform, bei dem bzw. der der größte Teil des oder der Auftriebskörper deutlich unter der Wasserlinie liegt.

Aus dem Bereich der Ölförderung ist eine Reihe entsprechender Plattformen bekannt, welche sich auch als schwimmfähige Einheiten im Rahmen der vorliegenden Erfindung eignen. Hierbei handelt es sich beispielsweise um Halbtaucherplattformen, die auf Pontons schwimmen. Entsprechende Plattformen weisen typischerweise Ballasttanks auf, die eine Stabilisierung auch unter widrigen Wetterverhältnissen erlauben.

Die im Rahmen der vorliegenden Erfindung verwendbaren schwimmfähigen Einheiten können eigen- oder fremdangetrieben sein. Beispielsweise können Plattformen mit Schleppern auf Position gebracht und dort verankert werden. Zusätzlich können bei Plattformen Antriebe vorgesehen sein, beispielsweise mehrere schwenkbare Strahlruder oder Propellergondeln, die unterschiedlich positioniert sein können.

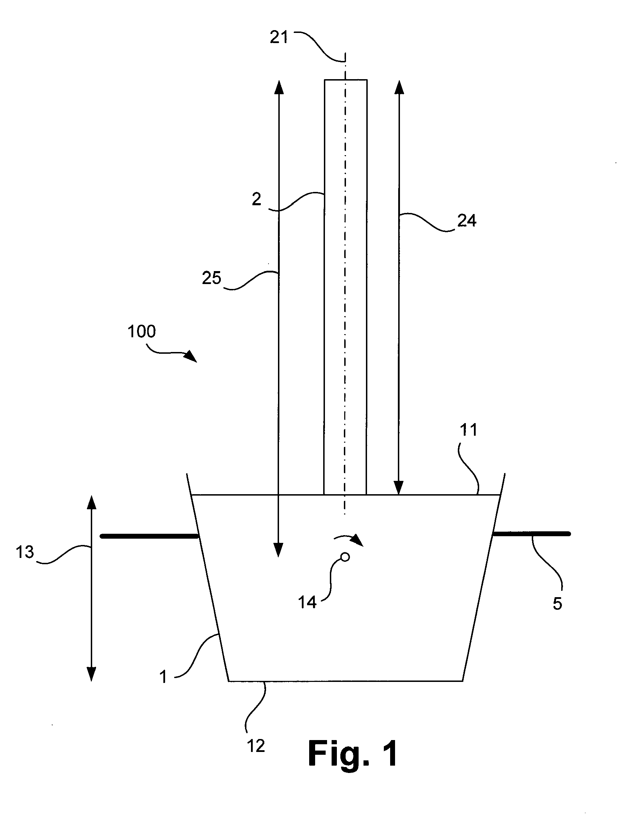

Die Anordnung zumindest eines Abschnitts wenigstens einer Trennsäule einer schwimmfähigen Tieftemperatur-Gaszerlegungsanlage unterhalb des Hauptdecks einer schwimmfähigen Einheit wurde bei herkömmlichen, schwimmfähigen Tieftemperatur-Gaszerlegungsanlagen nicht vorgenommen, weil hier typischerweise ein Großteil des Raums unter dem Hauptdeck mit Tanks (beispielsweise für Öl, Stickstoff oder Flüssigerdgas) belegt war. Hierdurch wurden sämtliche Prozessanlagen auf dem Hauptdeck platziert. Wie auch unter Bezugnahme auf die beigefügte Figur 1 veranschaulicht, kommt es bei einer Anordnung einer Trennsäule vollständig über Deck jedoch zu einer beträchtlichen Auslenkung des höchsten Punkts der Trennsäule, was bewirkt, dass sich in der Trennsäule vorliegende Flüssigkeit ungleichmäßig verteilt und hierdurch die Trennleistung negativ beeinflusst wird. Mit anderen Worten befindet sich durch die Platzierung einer Trennsäule auf Deck das obere Ende der Trennsäule weit über einem Rotationspunkt der schwimmfähigen Einheit. Die horizontalen Trägheitskräfte (resultierend aus der dynamischen Bewegung der schwimmfähigen Einheit) auf die Fluide in der Trennsäule, die zur Ungleichverteilung in der Trennsäule führen, sind direkt proportional zur Höhe über einem entsprechenden Rotationspunkt.

Die erfindungsgemäß vorgeschlagene Verlagerung zumindest eines Abschnitts der wenigstens einen Trennsäule unterhalb des Hauptdecks der schwimmfähigen Einheit geht vorteilhafterweise mit der Bereitstellung einer geeigneten Auffangeinrichtung einher, die dafür eingerichtet ist, eventuell aus der Trennsäule austretende kryogene Flüssigkeiten bzw. tiefkalte Medien aufzufangen, und damit Schäden an der Struktur der schwimmfähigen Einheit aufgrund der tiefen Temperatur zu vermeiden. Vorteilhafterweise ist ferner eine Möglichkeit vorgesehen, die auf diese Weise in der Auffangeinrichtung gesammelten tiefkalten Flüssigkeiten definiert wieder abzugeben.

Zum Auffangen und nachfolgenden Abgeben tiefkalter Flüssigkeiten aus einer Trennsäule ist beispielsweise aus der US 6 360 545 A eine Auffangeinrichtung bekannt, die aus kälteresistenten Ziegeln gebildet ist. Ferner wird ein Verdampfer verwendet, um die aufgefangene Flüssigkeit kontrolliert zu verdampfen und dabei beispielsweise übermäßige Nebelbildung zu vermeiden. Thermisch isolierte Coldboxen mit einer Auffangeinrichtung aus Edelstahl sind ebenfalls aus dem Stand der Technik bekannt.

Auch weitere Einrichtungen, die zum Betrieb einer Tieftemperatur-Gaszerlegungsanlage erforderlich sind, können unterhalb des Hauptdecks der schwimmfähigen Einheit angebracht werden. Insbesondere betrifft dies einen Hauptverdichter. Hierdurch kann die Stabilität der schwimmfähigen Einheit verbessert werden, weil sich der Schwerpunkt aufgrund des hohen Gewichts des Hauptverdichters nach unten verlagert.

Vorteilhafterweise werden im Rahmen der vorliegenden Erfindung zusätzliche Stabilisierungseinrichtungen verwendet, die entweder auf die schwimmfähige Einheit selbst oder auf die wenigstens eine Trennsäule wirken. Zur Stabilisierung schwimmfähiger Plattformen können die bereits erwähnten Ballasttanks verwendet werden oder entsprechende Antriebe, die einen Seegang ausgleichen. Hierzu sind vorteilhafterweise Messmittel und Steuereinrichtungen vorgesehen, die den auf eine schwimmfähige Einheit wirkenden Seegang bzw. ein entsprechendes Wellenfeld erfassen und auf dieser Grundlage entsprechende Antriebe ansteuern.

Stabilisierungseinrichtungen, die auf die wenigstens eine Trennsäule wirken, können insbesondere passive und/oder aktive Dämpfungsmittel und/oder pendelfähige Trägerstrukturen umfassen. Eine oder mehrere Trennsäulen können beispielsweise in einer pendelfähigen Trägerstruktur aufgehängt sein und in einem unteren Bereich durch Stabilisierungsmassen stabilisiert werden. Werden beispielsweise Ballasttanks verwendet, können diese auch je nach Bedarf gefüllt oder entleert werden.

Besonders vorteilhaft sind in diesem Zusammenhang Schwingungstilger, die beispielsweise mit der wenigstens einen Trennsäule in Wirkverbindung stehen können und deren Eigenfrequenz auf die zu eliminierende Resonanzfrequenz der wenigstens einen Trennsäule, die sich aus dem Seegang ergibt, abgestimmt werden kann. Die Eigenfrequenz eines entsprechenden Schwingungstilgers kann beispielsweise auf die vorherrschende Frequenz des Seegangs abgestimmt und durch eine geeignete Masseveränderung und/oder -verlagerung, beispielsweise in Ballasttanks, an auftretende Änderungen angepasst werden.

Aktive Dämpfungsmittel umfassen beispielsweise Aktoren wie Linearmotoren oder hydraulische Anriebe, die gegenphasig zu dem auf die schwimmfähige Einheit wirkenden Seegang angesteuert werden können. Zur Erfassung des Seegangs bzw. eines auf die schwimmfähige Einheit einwirkenden Wellenfelds können an der oder um die schwimmfähige Einheit geeignete Sensoren angeordnet werden, die beispielsweise die Frequenz und die Amplitude der Wasserbewegung und/oder die Geschwindigkeit und/oder den Staudruck des Wassers, also hydrostatische und/oder hydrodynamische Kenngrößen, erfassen. In diesem Zusammenhang können sämtliche bekannten Sensoren zum Einsatz kommen, die aus der Nautik bekannt sind.

Insgesamt ergibt sich im Rahmen der vorliegenden Erfindung durch die Anordnung zumindest eines Abschnitts wenigstens einer Trennsäule einer schwimmfähigen Tieftemperatur-Gaszerlegungsanlage unterhalb des Hauptdecks durch die verbesserte Trennung ein zuvor nicht erwarteter Vorteil, selbst wenn hierzu der Raum unterhalb des Hauptdecks nicht mehr vollständig für Tanks genutzt werden kann und eine Auffangeinrichtung bereitgestellt werden muss.

Vorteilhafterweise ist die wenigstens eine Auffangeinrichtung mit Verdampfungsmitteln versehen, die dafür eingerichtet sind, aus der wenigstens einen Trennsäule austretende tiefkalte Flüssigkeiten zumindest teilweise zu verdampfen. Zum Verdampfen können beliebige bekannte Vorrichtungen bzw. Heizmittel verwendet werden. Neben elektrischen Heizern können beispielsweise Heißwasser und/oder Dampf (je nach Verfügbarkeit) zum Einsatz kommen. Die Verdampfungsmittel können dabei von entsprechenden Medien durchströmte Rohre umfassen.

Vorteilhafterweise ist wenigstens eine Regeleinheit mit den Verdampfungsmitteln gekoppelt, wobei die wenigstens eine Regeleinheit dafür eingerichtet ist, eine Verdampfungsleistung auf Grundlage einer durch die Verdampfung bewirkten Nebelbildung zu regeln. Soll beispielsweise eine schwimmfähige Einheit durch einen Helikopter angeflogen werden und/oder ist eine visuelle Navigation erforderlich, kann die Regeleinheit die Verdampfungsleistung reduzieren. In anderen Fällen kann die Verdampfungsleistung erhöht werden, so dass entsprechendes Fluid schnell und effektiv verdampft werden kann.

Vorteilhafterweise umfasst die wenigstens eine Auffangeinrichtung Leckdetektionsmittel, die dafür eingerichtet sind, ein Austreten von tiefkalter Flüssigkeit aus der wenigstens einen Trennsäule zu detektieren. Hierdurch wird eine sehr einfache Detektion von Lecks ermöglicht. Beispielsweise können derartige Leckdetektionsmittel Temperatursensoren umfassen, die ein Austreten tiefkalter Flüssigkeit durch ein Absinken der Temperatur in der wenigstens einen Auffangeinrichtung erfassen.

Der Umfang, in dem der Abschnitt der wenigstens einen Trennsäule unterhalb des Hauptdecks angeordnet ist, kann je nach Bedarf gewählt werden. Der unterhalb des Hauptdecks angeordnete Abschnitt der wenigstens einen Trennsäule kann dabei zumindest 10% einer Längserstreckung der wenigstens einen Trennsäule oder mehr umfassen, beispielsweise wenigstens 20%, 30% oder 40% und bis zu 50%, 60%, 70% oder mehr. Die wenigstens eine Trennsäule kann auch vollständig unterhalb des Hauptdecks der schwimmfähigen Einheit angeordnet sein.

Insbesondere ist die schwimmfähige Tieftemperatur-Gaszerlegungsanlage der vorliegenden Erfindung mit wenigstens einer Trennsäule zur Tieftemperatur-Gaszerlegung von Luft, Synthesegas oder eines kohlenwasserstoffhaltigen Gasgemischs ausgestattet. Die vorliegende Erfindung eignet sich für sämtliche Tieftemperatur-Gaszerlegungsverfahren, die auf See durchgeführt werden können. Vorteilhafterweise ist die wenigstens eine Trennsäule der erfindungsgemäßen schwimmfähigen Tieftemperatur-Gaszerlegungsanlage in wenigstens einer Coldbox angeordnet, wie zuvor erläutert.

Das erfindungsgemäß ebenfalls vorgesehene Verfahren zur Tieftemperatur-Gaszerlegung, bei dem eine schwimmfähige Tieftemperatur-Gaszerlegungsanlage verwendet wird, wie sie zuvor erläutert wurde, profitiert von den erläuterten Vorteilen. Auf diese wird daher ausdrücklich verwiesen.

Die Erfindung wird nachfolgend unter Bezugnahme auf die beigefügten Figuren näher erläutert. Hierbei zeigen
Figur 1 eine schwimmfähige Tieftemperatur-Gaszerlegungsanlage gemäß dem Stand der Technik,
Figur 2 eine schwimmfähige Tieftemperatur-Gaszerlegungsanlage gemäß einer Ausführungsform der Erfindung,
Figur 3 eine schwimmfähige Tieftemperatur-Gaszerlegungsanlage gemäß einer weiteren Ausführungsform der Erfindung, und
Figur 4 eine schwimmfähige Tieftemperatur-Gaszerlegungsanlage gemäß einer weiteren Ausführungsform der Erfindung.

In den Figuren tragen einander entsprechende Elemente identische Bezugszeichen und werden der Übersichtlichkeit halber nicht wiederholt erläutert.

In den Figuren ist eine schwimmfähige Tieftemperatur-Gaszerlegungsanlage auf einem Schiff gezeigt, die jeweiligen Erläuterungen gelten jedoch in gleicher Weise für die eingangs erwähnten anderen schwimmfähigen Einheiten.

In Figur 1 ist eine schwimmfähige Tieftemperatur-Gaszerlegungsanlage gemäß dem Stand der Technik schematisch dargestellt und insgesamt mit 100 bezeichnet. Die schwimmfähige Tieftemperatur-Gaszerlegungsanlage 100 ist dabei im Querschnitt durch ein Schiff 1, das Bestandteil der schwimmfähigen Tieftemperatur-Gaszerlegungsanlage 100 ist, dargestellt. Das Schiff 1 weist ein Hauptdeck 11 und einen hier vereinfacht horizontal dargestellten Schiffsboden 12 auf. Eine Vertikaldistanz 13 zwischen dem Hauptdeck 11 und dem Schiffsboden 12 beträgt im dargestellten Beispiel beispielsweise 30 Meter. Eine Wasseroberfläche ist mit 5 bezeichnet. Aufgrund eines Seegangs rollt das Schiff entsprechend einer Pfeilrichtung um einen Rotationspunkt 14. Ebenfalls auftretende Gier- und Stampfbewegungen sind der Übersichtlichkeit halber nicht veranschaulicht.

Die schwimmfähige Tieftemperatur-Gaszerlegungsanlage 100 umfasst ferner wenigstens eine auf dem Schiff angeordnete Trennsäule 2. Die wenigstens eine Trennsäule 2 ist, wie mehrfach zuvor erläutert, zur Tieftemperatur-Gaszerlegung zumindest eines in die wenigstens eine Trennsäule 2 eingespeisten Gasgemischs eingerichtet. Die wenigstens eine Trennsäule 2 kann beispielsweise als Destillationssäule oder als Absorptionskolonne ausgebildet sein. Die wenigstens eine Trennsäule ist in wenigstens einer Coldbox angeordnet (nicht dargestellt).

Eine Längsachse 21 der wenigstens einen Trennsäule 2 ist im Wesentlichen senkrecht zu dem Hauptdeck 11 des Schiffs 1 angeordnet. Die wenigstens eine Trennsäule 2 weist im dargestellten Beispiel eine maximale Längserstreckung 24 entlang der Längsachse 21 auf, die beispielsweise 60 Meter beträgt. Der höchste Punkt der Trennsäule 2 befindet sich damit in einem der maximalen Längserstreckung 24 entsprechenden Abstand oberhalb des Hauptdecks 11, hier in einem Abstand von 60 Metern. Der höchste Punkt der Trennsäule 2 liegt jedoch nochmals um eine beträchtliche Distanz oberhalb des Rotationspunkts 14, so dass eine Maximaldistanz 25 zwischen dem höchsten Punkt der Trennsäule 2 und dem Rotationspunkt 14 beispielsweise 70 Meter beträgt. Insbesondere die oberen Abschnitte der Trennsäule 2 werden daher bei einer Rollbewegung (und auch bei entsprechenden anderen Bewegungen) des Schiffs 1 stark ausgelenkt, so dass es aufgrund der Verlagerung der Fluide in der Trennsäule 2 zu beträchtlichen Ungleichförmigkeiten kommt. Die Trennleistung der Säule 2 wird daher herkömmlicherweise deutlich herabgesetzt.

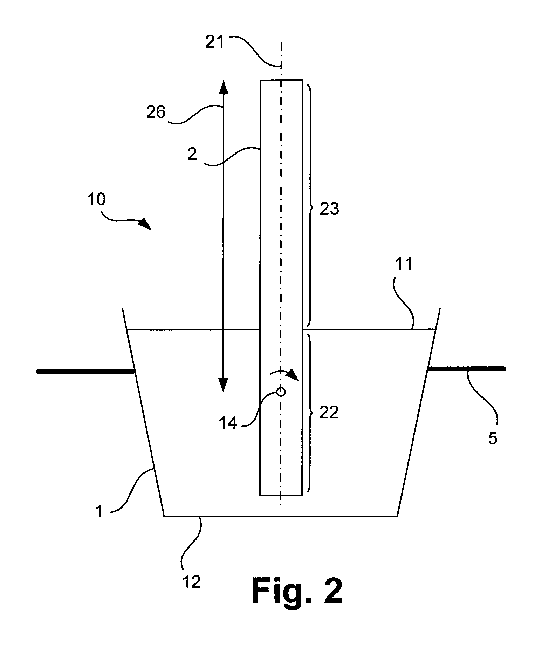

Die vorliegende Erfindung, wie sie in Form eines Ausführungsbeispiels in Figur 2 veranschaulicht ist, schafft hier Abhilfe. Figur 2 zeigt eine schwimmfähige Tieftemperatur-Gaszerlegungsanlage gemäß einer Ausführungsform der Erfindung, die insgesamt mit 10 bezeichnet ist. Die in Figur 2 dargestellte Ausführungsform zeichnet sich dadurch aus, dass ein hier insgesamt mit 22 bezeichneter Abschnitt der Trennsäule 2 unterhalb des Hauptdecks 11 angeordnet ist. Lediglich der insgesamt mit 23 bezeichnete Abschnitt der Trennsäule 2 ist oberhalb des Hauptdecks 11 des Schiffs 1 angeordnet. Hierdurch verringert sich eine Distanz zwischen dem höchsten Punkt der Trennsäule 2 und dem Rotationspunkt 14 entsprechend, im dargestellten Beispiel auf eine Distanz 26 von 45 Metern. Der höchste Punkt der Trennsäule 2 wird daher nurmehr in geringerem Umfang ausgelenkt.

Wie bereits zuvor erläutert, ist, weil im Rahmen der vorliegenden Erfindung zumindest ein Abschnitt 22 der Trennsäule 2 unterhalb des Hauptdecks 11 angeordnet ist, dafür Sorge zu tragen, dass gegebenenfalls aus der wenigstens einen Trennsäule 2 austretende tiefkalte Flüssigkeit aufgefangen wird, weil sie nicht mehr vom Hauptdeck 11 eines entsprechenden Schiffs 1 (vgl. Figur 1) abfließen kann.

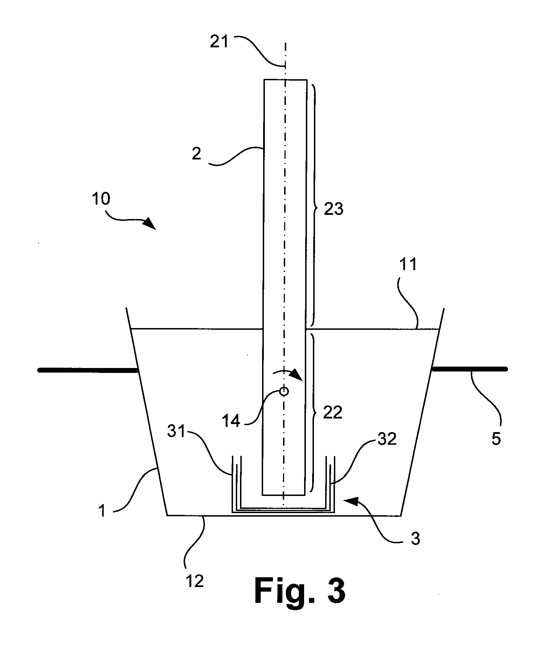

Figur 3 zeigt eine schwimmfähige Tieftemperatur-Gaszerlegungsanlage gemäß einer weiteren Ausführungsform der Erfindung, bei der eine Auffangeinrichtung 3 vorgesehen ist, die dafür eingerichtet ist, eine aus der wenigstens einen Trennsäule 2 austretende tiefkalte Flüssigkeit aufzufangen. Die schwimmfähige Tieftemperatur-Gaszerlegungsanlage ist auch hier insgesamt mit 10 bezeichnet.

Die Auffangeinrichtung 3 kann beispielsweise in Form eines doppelwandigen Behälters 31 und/oder unter Verwendung von tieftemperaturfesten Ziegeln ausgebildet sein, wie beispielsweise aus der US 6 360 545 A bekannt.

In die wenigstens eine Auffangeinrichtung 3 können insbesondere Verdampfungsmittel 32 integriert sein, die hier stark schematisiert veranschaulicht sind. Entsprechende Verdampfungsmittel können dafür eingerichtet sein, aus der wenigstens einen Trennsäule 2 austretende tiefkalte Flüssigkeit zumindest teilweise zu verdampfen. Die Verdampfungsmittel 32 können beispielsweise elektrisch und/oder unter Verwendung geeigneter Heizmedien, beispielsweise Dampf, betrieben werden. Vorzugsweise sind die Verdampfungsmittel 32 dabei mit wenigstens einer Regeleinheit gekoppelt (nicht dargestellt), die dafür eingerichtet ist, eine Verdampfungsleistung auf Grundlage einer durch die Verdampfung bewirkten Nebelbildung einzustellen. Hierbei kann bei Bedarf die Verdampfungsleistung reduziert werden, um zu verhindern, dass ein Schiff 1 beispielsweise aufgrund starker, durch die Verdampfung bewirkter Nebelbildung mittels eines Helikopters nicht mehr angeflogen werden kann. Zu anderen Zeiten kann eine entsprechende Regeleinheit die Verdampfungsleistung erhöhen.

In die wenigstens eine Auffangeinrichtung 3 können auch (nicht dargestellte) Leckdetektionsmittel integriert sein, die, beispielsweise auf Grundlage einer Temperaturmessung, dafür eingerichtet sind, ein Austreten von tiefkalter Flüssigkeit aus der wenigstens einen Trennsäule zu detektieren.

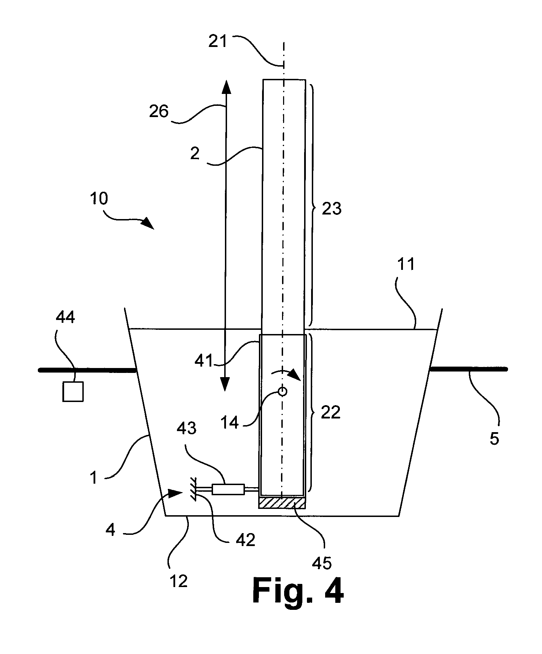

In Figur 4 ist eine schwimmfähige Tieftemperatur-Gaszerlegungsanlage gemäß einer weiteren Ausführungsform der Erfindung gezeigt. Auf eine Darstellung der in Figur 3 gezeigten Auffangeinrichtung 3 wurde verzichtet; eine entsprechende Auffangeinrichtung 3 kann jedoch auch hier vorhanden sein.

Die in Figur 4 gezeigte Tieftemperatur-Gaszerlegungsanlage umfasst eine Stabilisierungseinrichtung 4, die auf die Trennsäule 2 bzw. eine diese aufnehmende Coldbox wirkt. Die Trennsäule 2 ist hierzu in einer beispielsweise um den Rotationspunkt 14 pendelfähige Trägerstruktur 41 aufgenommen. Zur Dämpfung von Schwingungen der Trennsäule 2 in der Trägerstruktur 41 ist beispielsweise zwischen der Trägerstruktur 41 und einer Verankerung 42 ein beispielsweise hydraulischer oder elektrischer Aktor 43 vorgesehen, der gegenphasig zu einem Seegang angesteuert werden kann, der durch eine Schwingung des Schiffs 1 und/oder mittels eines oder mehrerer Sensoren 44 erfasst werden kann. Alternativ oder zusätzlich können eine oder mehrere Ausgleichsmassen, Schwingungstilger und/oder Ballasttanks 45 vorgesehen sein.

## Patentansprüche

1. Schwimmfähige Tieftemperatur-Gaszerlegungsanlage (10), die eine schwimmfähige Einheit (1) und wenigstens eine auf der schwimmfähigen Einheit (1) angeordnete Trennsäule (2) umfasst, wobei die wenigstens eine Trennsäule (2) zur Tieftemperatur-Gaszerlegung zumindest eines in die wenigstens eine Trennsäule (2) eingespeisten Gasgemischs eingerichtet ist und mit einer Längsachse (21) senkrecht zu einem Hauptdeck (11) der schwimmfähigen Einheit (1) angeordnet ist, **dadurch gekennzeichnet, dass** zumindest ein Abschnitt (22) der wenigstens einen Trennsäule (2) entlang der Längsachse (21) unterhalb des Hauptdecks (11) der schwimmfähigen Einheit (1) angeordnet ist.

2. Schwimmfähige Tieftemperatur-Gaszerlegungsanlage (10) nach Anspruch 1, bei der zumindest ein Abschnitt der wenigstens einen Trennsäule (2) entlang der Längsachse unterhalb der Konstruktionswasserlinie oder unterhalb einer durch das Metazentrum, den Schwerpunkt oder den Formschwerpunkt der schwimmfähigen Einheit (1) verlaufenden Ebene angeordnet ist.

3. Schwimmfähige Tieftemperatur-Gaszerlegungsanlage (10) nach einem der Ansprüche 1 oder 2, bei der die schwimmfähige Einheit (1) als Schiff oder als schwimmfähige Plattform ausgebildet ist.

4. Schwimmfähige Tieftemperatur-Gaszerlegungsanlage (10) nach einem der vorstehenden Ansprüche, die wenigstens eine unterhalb der wenigstens einen Trennsäule (2) angeordnete Auffangeinrichtung (3) aufweist, die zum Auffangen aus der wenigstens einen Trennsäule (2) austretender tiefkalter Flüssigkeit eingerichtet ist.

5. Schwimmfähige Tieftemperatur-Gaszerlegungsanlage (10) nach Anspruch 4, bei der die wenigstens eine Auffangeinrichtung (3) Verdampfungsmittel (32) umfasst, die dafür eingerichtet sind, die aus der wenigstens einen Trennsäule (2) austretende tiefkalte Flüssigkeit zumindest teilweise zu verdampfen.

6. Schwimmfähige Tieftemperatur-Gaszerlegungsanlage (10) nach Anspruch 5, bei der die Verdampfungsmittel (32) mit wenigstens einer Regeleinheit gekoppelt sind, die dafür eingerichtet ist, eine Verdampfungsleistung auf Grundlage einer durch die Verdampfung bewirkten Nebelbildung einzustellen.

7. Schwimmfähige Tieftemperatur-Gaszerlegungsanlage (10) nach einem der Ansprüche 4 bis 6, bei der die wenigstens eine Auffangeinrichtung (3) Leckdetektionsmittel umfasst, die dafür eingerichtet sind, ein Austreten von tiefkalter Flüssigkeit aus der wenigstens einen Trennsäule (2) zu detektieren.

8. Schwimmfähige Tieftemperatur-Gaszerlegungsanlage (10) nach einem der vorstehenden Ansprüche, die wenigstens eine mit der schwimmfähigen Einheit (1) und/oder der wenigstens einen Trennsäule (2) in Wirkverbindung stehende Stabilisierungseinrichtung (4) aufweist.

9. Schwimmfähige Tieftemperatur-Gaszerlegungsanlage (10) nach Anspruch 8, bei der die wenigstens eine Stabilisierungseinrichtung (4) aktive und/oder passive Dämpfungsmittel mit wenigstens einem Aktor (43) und/oder wenigstens einer Ausgleichsmasse (45) umfasst.

10. Schwimmfähige Tieftemperatur-Gaszerlegungsanlage (10) nach einem der Ansprüche 8 oder 9, bei der die wenigstens eine Trennsäule (2) in wenigstens einer Trägerstruktur (41) angebracht ist, die gegenüber der schwimmfähigen Einheit (1) aktiv und/oder passiv bewegbar ist.

11. Schwimmfähige Tieftemperatur-Gaszerlegungsanlage (10) nach einem der vorstehenden Ansprüche, bei der der unterhalb des Hauptdecks (11) angeordnete Abschnitt (22) der wenigstens einen Trennsäule (2) zumindest 10% der Längserstreckung der Trennsäule (2) entspricht.

12. Schwimmfähige Tieftemperatur-Gaszerlegungsanlage (10) nach einem der vorstehenden Ansprüche, bei der die wenigstens eine Trennsäule (2) zur Tieftemperatur-Gaszerlegung von Luft, Synthesegas oder eines kohlenwasserstoffhaltigen Gasgemischs eingerichtet ist.

13. Schwimmfähige Tieftemperatur-Gaszerlegungsanlage (10) nach einem der vorstehenden Ansprüche, bei der die wenigstens eine Trennsäule (2) in wenigstens einer Coldbox angeordnet ist.

14. Verfahren zur Tieftemperatur-Gaszerlegung, **dadurch gekennzeichnet, dass** eine schwimmfähige Tieftemperatur-Gaszerlegungsanlage (10) nach einem der vorstehenden Ansprüche verwendet wird.
